Europäisches Patentamt

European Patent Office

Office européen des brevets

(11) Veröffentlichungsnummer: **0 096 264**
**B1**

(12) **EUROPÄISCHE PATENTSCHRIFT**

(45) Veröffentlichungstag der Patentschrift: **23.03.88**

(51) Int. Cl.⁴: **C 08 L 77/00** // C08L23/08

(21) Anmeldenummer: **83105001.8**

(22) Anmeldetag: **20.05.83**

(54) Schlagzähe Polyamid-Formmassen.

(30) Priorität: **29.05.82 DE 3220380**

(43) Veröffentlichungstag der Anmeldung:
**21.12.83 Patentblatt 83/51**

(45) Bekanntmachung des Hinweises auf die
Patenterteilung:
**23.03.88 Patentblatt 88/12**

(84) Benannte Vertragsstaaten:
**BE CH DE FR GB IT LI NL**

(56) Entgegenhaltungen:
**DE-B-2 713 537**

(73) Patentinhaber: **BASF Aktiengesellschaft
Carl-Bosch-Strasse 38
D-6700 Ludwigshafen (DE)**

(72) Erfinder: **Reimann, Horst, Dr.
Adelheidstrasse 26
D-6520 Worms 1 (DE)**
Erfinder: **Ziegler, Walter, Dr.
Starenweg 15
D-6803 Edingen-Neckarhausen (DE)**
Erfinder: **Brandstetter, Franz, Dr.
Ritterbueschel 45
D-6730 Neustadt (DE)**
Erfinder: **Theysohn, Rainer, Dr.
Am Bruch 38
D-6710 Frankenthal (DE)**
Erfinder: **Pflueger, Richard
Am Weidenschlag 20
D-6700 Ludwigshafen (DE)**

**Die Akte enthält technische Angaben, die nach
dem Eingang der Anmeldung eingereicht
wurden und die nicht in dieser Patentschrift
enthalten sind.**

Courier Press. Leamington Spa, England.

## Beschreibung

Gegenstand der Erfindung sind Polymergemische auf Basis von Polyamiden, die eine hohe Zähigkeit bei hervorragender Homogenität und eine gute Verarbeitbarkeit aufweisen.

Die mechanischen Eigenschaften von Polymeren hängen häufig von der Art ihrer Vorbehandlung ab. So ist die Schlagzähigkeit von Formkörpern aus Polyamidkunststoffen erheblich vom Wassergehalt der Formkörper abhängig.

In wasserfreiem Zustand sind besonders die aus leichtfliessenden, vorzugsweise hochkristallinen Polyamiden mit mittlerem Molekulargewicht, hergestellten Formkörper relativ empfindlich gegen Schlagbeanspruchung. Es besteht daher ein Bedarf nach rasch verarbeitbaren, leichtfließenden Polyamidkunststoffen, aus denen sich insbesondere Formkörper herstellen lassen, die in trockenem Zustand eine erhöhte Schlagzähigkeit besitzen. Besonders sind solche Polyamide von Interesse, die hohe Zugfestigkeit, hohe Wärmestandfestigkeit, gute Beständigkeit gegen Lösungsmittel und leichte Verarbeitbarkeit kombiniert mit einer hohen Schlagzähigkeit und Flexibilität aufweisen.

Es sind bereits verschiedene Verfahren zur Erhöhung der Zähigkeit und Flexibilität von Polyamiden bekannt. So z.B. das Einmischen von niedermolekularen Weichmachern in Polyamide, das aber aus mehreren Gründen keine zufriedenstellende Lösung des Problems bringt. Der größte Teil der für Kunststoffe geeigneten Weichmacher ist mit Polyamiden nicht genügend verträglich und entmischt sich beim Verarbeiten bzw. neigt zum Ausschwitzen. Verträgliche Weichmacher, die mit Polyamiden echte Lösungen bilden, verschlechtern aber meist die guten mechanischen Eigenschaften der Polyamide. Stark polare Stoffe mit niedrigem Molekulargewicht wie Wasser oder Dimethylformamid zeigen zwar eine starke Weichmacherwirkung, sie können jedoch erst nach der Herstellung von Polyamidformkörpern in diese eingearbeitet werden, weil sonst bei der Verarbeitung des vorbehandelten Polyamidgranulats wegen der relativ niederen Siedepunkte dieser Weichmacher blasenhaltige Formkörper entstehen würden. Außerdem entweichen diese Weichmacher wegen ihres relativ hohen Dampfdruckes teilweise wieder aus so behandelten Polyamidformkörpern. Es wurde auch versucht, die Schlagzähigkeit von Polyamiden durch Zumischen von polymeren Stoffen wie Polyethylen und Copolymerisaten aus Vinylacetat und Ethylen (DE—AS 1 138 922) zu verbessern. Obwohl bei der Herstellung derartiger Mischungen ein sehr intensives Kneten erforderlich ist, treten teilweise Entmischungen beim Weiterverarbeiten z.B. im Spritzguß auf. Daraus hergestellte Formkörper zeigen daher Neigung zum Weißbruch.

Die Flexibilität von Polyamiden kann auch durch Einmischen von saure Gruppen enthaltenden Polyethylenen, wie z.B. Copolymerisaten aus Ethylen und ungesättigten Säuren oder mit ungesättigten Säuren gepfropftes Polyethylen, erhöht werden. Derartige Mischungen sind zwar feindisperser und zeigen bei Beanspruchung einen weit geringeren Weißbruch als die oben beschriebenen Mischungen, sie besitzen jedoch, abgesehen von der etwas verbesserten Zähigkeit und Flexibilität, erheblich schlechtere mechanische Eigenschaften, wie z.B. E-Modul, Zugfestigkeit, Härte, Steifigkeit, als die Polyamide selbst.

So wird gemäß der Lehre der Patentschriften US—PS 3 742 916 und DE—PS 1 669 702 durch Einsatz von Copolymerisaten aus Ethylen und tertiären (Meth)acrylsäureestern eine gewisse Verbesserung erzielt. Die Produkte zeigen eine unbefriedigende thermische Stabilität. Die Kerbschlagzähigkeit im spritzfrischen Zustand ist noch unbefriedigend, ebenso wie die merkliche Entmischungstendenz. Der gleiche Nachteil haftet den aus den US—PS 3 845 163 bzw. FR—PS 1 504 113 bekannten Legierungen an, dei wegen der zum Teil als Salz vorliegenden Methacrylsäure noch zusätzliche Nachteile aufweisen. So fallen bekanntlich die Werte der Kriechstromfestigkeit bei Anwesenheit von Metallionen so stark ab, daß ein Einsatz der Produkte auf dem Elektrosektor kaum möglich ist. Darüberhinaus sind die meisten der zur Neutralisation verwendeten Metallionen—z.B. $Zn^{2+}$, $Ba^{2+}$, $Cd^{2+}$, $Hg^{2+}$—physiologisch bedenklich. So dürften derartige Produkte weder auf dem Sektor der Lebensmittelverpackung noch als Kinderspielzeug eingesetzt werden.

Es wurden auch Copolymerisate aus Ethylen, (Meth)acrylsäure und (Meth)acrylaten als elastifizierende Komponente Polyamiden zugesetzt (DE—AS 1 241 606), wodurch eine Verbesserung der Schlagzähigkeit erzielt wird. Hochschlagzähe Produkte sind aber auch hier nicht beschrieben.

In der DE—OS 27 13 537 werden hochschlagzähe Produkte beschrieben, bei denen tertiäre Copolymerisate aus Ethylen, 4 Gew.-% Acrylsäure und Ethyl- oder tert.-Butylacrylat (12 bzw. 7 Gew.%) eingesetzt werden. Erforderlich ist eine relative Viskosität des eingesetzten Polyamids von mindestens 3.5. Derartige Produkte sind auf Grund ihres ungenügenden Fließverhaltens nur sehr schwer verarbeitbar.

In der DE—OS 26 22 973 wird offenbart, daß ein Polyamid in der Zähigkeit verbessert werden kann, wenn man ein Polymeres zugibt, welches Haftstellen zum Polyamid aufweist und einen mindestens um den Faktor 10 niedrigeren Zug-E-Modul als Polyamid hat, also sehr weich ist. Die Polymeren werden in teilneutralisierter Form eingesetzt, wegen der Anwesenheit von Metallionen ist ein Einsatz auf dem Elektrosektor kaum möglich.

Überraschenderweise wurde gefunden, daß die Nachteile der bekannten Produkte überwunden werden und daß man hochschlagzähe und verarbeitungsstabile Polyamide erhält, wenn man ein unvernetztes, thermisch stabiles Ethylencopolymerisat verwendet, welches die erfindungsgemäße Zusammensetzung aufweist.

Gegenstand der Erfindung sind daher schlagzähe Polyamid-Formmassen, enthaltend

(A) ein thermoplastisches Polyamid und

(B) 5 bis 60 Gew.%, bezogen auf (A), eines unvernetzten, zumindest tertiären Copolymerisats aus

a) 55 bis 79,5 Gew.% Ethylen,

b) 20 bis 40 Gew.% zumindest eines primären oder sekundären $C_2$—$C_8$-Alkylesters der (Meth)acrylsäure und

c) 0,5 bis 8 Gew.% eines säurefunktionellen oder latent säurefunktionellen Monomeren,

wobei die Summe der Komponenten (a)—(c) 100 Gew.% beträgt, und

(C) gegebenenfalls übliche Zusatzstoffe in wirksamen Mengen, die dadurch gekennzeichnet sind, daß die Komponente (A) eine relative Viskosität von 2,5 bis 3,4 aufweist und daß die Komponente (B) einen Schmelzbereich zwischen 40 und 100°C, eine Glasübergangstemperatur unterhalb −20°C und einen Schubmodul von unter 100 [Nmm$^{-2}$] bei −20°C, unter 50 [Nmm$^{-2}$] bei 0°C und unter 20 [Nmm$^{-2}$] bei +20°C besitzt.

Die Polyamide gemäß der Erfindung sind an sich bekannt und umfassen die halbkristallinen und amorphen Harze mit Molekulargewichten von mindestens 5000, die gewöhnlich als Nylon bezeichnet werden. Solche Polyamide sind in den US—PSen 2 071 250, 2 071 251, 2 130 523, 2 130 948, 2 241 322, 2 312 966, 2 512 606 und 3 393 210 beschrieben. Das Polyamidharz kann durch Kondensation äquimolekularer Mengen einer gesättigten Dicarbonsäure mit 4 bis 12 Kohlenstoffatomen, mit einem Diamin, welches 4 bis 14 Kohlenstoffatome aufweist, hergestellt werden. Um einen Überschuß an endständigen Amingruppen über die entständigen Carboxylgruppen in dem Polyamid zu erzielen, kann man das Diamin im Überschuß anwenden. Beispiele für Polyamide sind Polyhexamethylenadipinsäureamid (Nylon 66), Polyhexamethylenazelainsäureamid (Nylon 69), Polyhexamethylensebacinsäureamid (Nylon 610), Polyhexamethylendodecandisäureamid (Nylon 612), die durch Ringöffnung von Lactamen erhaltenen Polyamide, wie Polycaprolactam, Polylaurinsäurelactam, ferner Poly-11-aminoundecansäure und Bis - (p - aminocyclohexyl) - methandodecandisäureamid. Es ist auch möglich, gemäß der Erfindung Polyamide zu verwenden, die durch Copolymerisation zweier der oben genannten Polymeren oder durch Terpolymerisation der oben genannten Polymeren oder ihrer Komponenten hergestellt worden sind, z.B. das Copolymere aus Adipinsäure, Isophthalsäure und Hexamethylendiamin. Vorzugsweise sind die Polyamid linear und haben Schmelzpunkte von mehr als 200°C.

Bevorzugte Polyamide sind Polyhexamethylenadipinsäureamid und Polycaprolactam. Die Polyamide weisen eine relative Viskosität von 2,5 bis 3,4 auf, bestimmt an einer 1 %igen Lösung in $H_2SO_4$ bei 23°C. Polyamide mit einer relativen Viskosität von 3 bis 3, insbesondere 3,1 bis 3,4, werden bevorzugt verwendet.

Die erfindungsgemäß eingesetzten Copolymerisate sollen unvernetzt sein, d.h. sie sollen zu mindestens 90% in heißen Lösungsmitteln wie Toluol, Ethylbenzol oder Tetrachlorethylen löslich sein. Sie bestehen aus (a) 55 bis 79,5 Gew.% Ethylen, (b) 20 bis 40 Gew.%, vorzugsweise 25 bis 38 Gew.%, insbesondere 31 bis 36 Gew.% zumindest eines primären oder sekundären $C_2$—$C_8$-Alkylesters der (Meth)acrylsäure, vorzugsweise n-Butylacrylat, und (c) 0,5 bis 8 Gew.% eines Säuregruppen enthaltenden Monomeren, wie Methacrylsäure oder Acrylsäure, oder eines Monomeren mit verkappten Säuregruppen, das unter den Konfektionierbedingungen oder den Polymerisationsbedingungen Säuregruppen bildet, wie Maleinsäureanhydrid oder tert.-Butyl(meth)acrylat.

Die Copolymerisate weisen einen Schmelzbereich (Schmelzpunkt) zwischen 40 und 100°C auf und besitzen eine Glasübergangstemperatur unter −20°C, insbesondere unter −50°C, sowie einen Schubmodul (nach DIN 53 445) bei −20°C von unter 100, insbesondere unter 50 [Nmm$^{-2}$] bei 0°C von unter 50, insbesondere unter 20 [Nmm$^{-2}$] und bei −20°C von unter 20, insbesondere unter 10 [Nmm$^{-2}$].

Die Copolymerisate sind im allgemeinen hochmolekular und besitzen einen Schmelzindex MFI 190/2,16 (DIN 53 735) zwischen 4 und 20. Bezogen auf das Polymerisat werden die Copolymeren in einer Menge von 5 bis 60 Gew.%, vorzugsweise 5 bis 40 Gew.%, insbesondere 8 bis 25 Gew.%, eingesetzt. Die Herstellung der Copolymerisate erfolgt in üblicher, an sich bekannter Weise durch Polymerisation der Komponenten bei erhöhter Temperatur unter hohem Ethylendruck.

Die Massen gemäß der Erfindung können durch übliche Zusatzstoffe, wie Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, faser- und pulverförmige Füll- und Verstärkungsmittel, Keimbildungsmittel, Weichmacher usw. modifiziert werden, die in üblichen wirksamen Mengen eingesetzt werden.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann. Solche Stabilisatoren müssen mit der Masse verträglich sein.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie z.B. Halogenide von Metallen der Gruppe I des Periodischen Systems, z.B. Natrium, Kalium, Lithium, mit Kupfer-(I)-halogeniden, z.B. Chlorid, Bromid, Jodid, sterisch gehinderte Phenole, Hydrochinone, verschiedene substituierte Vertreter dieser Gruppen und Kombinationen derselben in Konzentrationen bis 1 Gew.%, bezogen auf das Gewicht des Polyamids.

Als UV-Stabilisatoren kann man ebenfalls diejenigen, die allgemein zu Polymeren zugesetzt werden, in

3

Mengen bis 2,0 Gew.%, bezogen auf das Polyamid, verwenden. Beispiele für UV-Stabilisatoren sind verschiedene substituierte Resorcine, Salicylate, Benzotriazole, Benzophenone und dergleichen.

Geeignete Gleit- und Entformungsmittel, die z.B. in Mengen bis 1,0 Gew.% der thermischen Masse zugesetzt werden, sind Stearinsäure, Stearinalkohol, Stearinsäureamide; ferner können zugesetzt werden: organische Farbstoffe, wie Nigrosin usw., Pigmente, z.B. Titandioxid, Cadmiumsulfid, Cadmiumsulfidselenid, Phthalocyanine, Ultramarinblau, Ruß usw.; faser- und pulverförmige Füllstoffe und Verstärkungsmittel, wie Kohlenstoffasern, Glasfasern, amorphe Kieselsäure, Asbest, Calciumsilicat, Aluminiumsilicat, Magnesiumcarbonat, Kaolin, Kreide, gepulverter Quarz, Glimmer, Feldspat usw. in Mengen bis 50 Gew.% der Masse, Keimbildungsmittel, wie Talkum, Calciumfluorid, Natriumphenylphosphinat, Aluminiumoxid und feinteiliges Polytetrafluorethylen usw., Weichmacher in Mengen bis etwa 20 Gew.% der Masse, z.B. Phthalsäuredioctylester, Phthalsäuredibenzylester, Phthalsäurebutylbenzylester, Kohlenwasserstofföle, N-n-Butylbenzolsulfonamid, o- und p-Toluolethylsulfonamid usw. Die Färbemittel (Farbstoffe und Pigmente) können in Mengen bis etwa 5,0 Gew.%, bezogen auf die Masse, zugesetzt werden.

Die verfestigten Massen gemäß der Erfindung werden üblicherweise in einem geschlossenen System durch Schmelzmischen des Polyamids mit den übrigen Komponenten zu einem gleichmäßigen Gemisch in einem Mehrfachschneckenextruder, wie einem Werner & Pfleiderer-Zweiwellenextruder oder anderen herkömmlichen Plastifizierungsvorrichtungen, wie einer Brabender-Mühle, einer Banbury-Mühle oder dgl. hergestellt werden. Die Gemische können aber auch durch gemeinsames Ausfällen aus Lösung oder durch Mischen oder Trockenmischen der Komponenten und anschließendes Schmelzstrangpressen des trockenen Gemisches hergestellt werden.

Bedingt durch den intensiven Mischvorgang liegt das Copolymerisat im Polyamid in Form von Einzelteilchen verteilt vor, welche eine Größe von unter 3 µm, bevorzugt unter 1 µm aufweisen.

Die erfindungsgemäßen Formmassen sind für die Spritzgieß- und Extrusionsverarbeitung geeignet, zur Herstellung von hochbeanspruchbaren, thermostabilen, schlagzähen Formteilen für technische Zwecke aller Art.

Beispiele 1 bis 6

100 Gew.-Teile eines Polyamid 6 mit der relativen Viskosität von 2,7, gemessen an einer 1 %igen Lösung in $H_2SO_4$ conc. bei 23°C und 11 Gew.-Teile von verschiedenen Ethylen-Terpolymerisaten mit jeweils in Tabelle 1 angegebener Zusammensetzung und einem Schmelz-Index zwischen 5 und 10 [g/10 min] gemessen bei 190°C und 2,16 kg Gewicht wurden über 2 getrennte Bandwaagen der Einfüllöffnung eines Zweiwellenextruders vom Typ ZSK 53 zugeführt und bei 150 U/min und 280°C verknetet und in ein Wasserbad extrudiert. Nach Granulierung und Trocknung wurden die Mischungen auf einer Spritzgußmaschine zu Prüfkörpern verspritzt und diese im trockenen Zustand geprüft. Die Werte der Kerbschlagzähigkeit nach DIN 53 453 in Tabelle 1 zeigen, daß mit zunehmendem nBA-Gehalt im Terpolymerisat ein Maximum der Zähigkeit durchschritten wird.

Beispiele 7 bis 12

Die Mischungen 7 bis 12 wurden analog wie in Beispielen 1 bis 6 beschrieben, hergestellt. Verglichen wird in den Beispielen ein erfindungsgemäßes Terpolymerisat mit einem Terpolymerisat aus Ethylen, t-Butylacrylat und Acrylsäure, wie es in der DE—OS 27 13 537 verwendet wurde. Der Vorteil der Kerbschlagzähigkeitserhöhung zeigt sich bei Verwendung des erfindungsgemäßen Terpolymerisats beim Einsatz in Polyamid 6, Polyamid 69 und auch Polyamid 66.

Beispiele 13 bis 18

Die in Tabelle 2 angegebenen Mischungen wurden analog wie in den Beispielen 1 bis 6 beschrieben hergestellt. Verglichen wird in den Beispielen die Durchstoßarbeit im Plastechontest bei unterschiedlichen Terpolymerisat-Zusätzen. Diese Durchstoßarbeit ist ein Maß für die multiaxiale Zähigkeit eines Formkörpers. Während aufgrund der Weichheit der Zusätze mit hohem nBA-Gehalt die Kerbschlagzähigkeit noch relativ hoch ist, setzen diese sehr weichen Terpolymerisate mit hohem nBA-Gehalt die multiaxiale Zähigkeit drastisch herab.

Beispiel 19

Wie in den Beispielen 1 bis 6 beschrieben, wurde eine Mischung aus 100 Gew.-Teilen eines Polyamid 6 mit der relativen Viskosität 3.3 mit 25 Gew.-Teilen eines Terpolymerisates aus Ethyeln-n-Butylacrylat-Maleinsäureanhydrid (77.2—32—0.8) hergestellt. Die an daraus hergestellten Prüfkörpern gemessenen Kerbschlagzähigkeiten betrugen bei

| | |
|---|---|
| +23°C | 40,7 [kJ m$^{-2}$] |
| −20°C | 11,0 [kJ m$^{-2}$] |
| −40°C | 11,3 [kJ m$^{-2}$]. |

Beispiele 20 und 21

100 Gew.-Teile Polyamid 6 der relativen Viskosität 3.3 wurden wie in den Beispielen 1 bis 6 beschrieben bei 270°C mit 25 Gew.-Teilen eines Ethylen-n-Butylacrylat-Acrylsäure-Terpolymerisats (69-27-4) bzw. eines Ethylen-t-Butylacrylat-Acrylsäure-Terpolymerisats (89-7-4), entsprechend dem in DE—OS 27 13 537

## 0 096 264

verwendeten Terpolymerisat vermischt. Bei der Prüfung auf Stabilität der Schmelze blieb bei dem erfindungsgemäßen Produkt die Schmelzviskosität bei 290°C über einen Zeitraum von mehr als 15 min gleich, während es bei dem t-Butylacrylat-Terpolymerisat erhaltenen Produkt zu einer Abnahme der Schmelzviskosität und zu Bläschenbildung in der Schmelze kam.

TABELLE 1

| Bei-spiel | Polyamid 100 Gew. Teile | rel. Vis-kosität | Copolymeres | Menge (Gew.-Teile) | Kerbschlagzähigkeit [kJ m$^{-2}$] (DIN 53 453) | | |
|---|---|---|---|---|---|---|---|
| | | | | | 23°C | −20°C | −40°C |
| 1[+] | PA 6 | 2.7 | E-tBA-AS (89-7-4) | 11 | 9.4 | 3.1 | 2.7 |
| 2[+] | PA 6 | 2.7 | E-nBA-AS (88-8-4) | 11 | 9.5 | 3.6 | 3.0 |
| 3 | PA 6 | 2.7 | E-nBA-AS (75-21-4) | 11 | 12.5 | 4.2 | 3.2 |
| 4 | PA 6 | 2.7 | E-nBA-AS (69-27-4) | 11 | 13.9 | 4.5 | 3.5 |
| 5 | PA 6 | 2.7 | E-nBA-AS (61-35-4) | 11 | 14.5 | 3.3 | 2.0 |
| 6[-] | PA 6 | 2.7 | E-nBA-AS (54-42-4) | 11 | 10.1 | 3.0 | 2.0 |
| 7[+] | PA 6 | 4 | E-tBA-AS (89-7-4) | 11 | 7.2 | 2.8 | 2.5 |
| 8[+] | PA 69 | 3.3 | E-tBA-AS (89-7-4) | 25 | 12.1 | 3.5 | 3.4 |
| 9 | PA 69 | 3.3 | E-nBA-AS (69-27-4) | 25 | 35.2 | 7.3 | 4.5 |
| 10[+] | PA 66 | 2.7 | E-tBA-AS (89-7-4) | 25 | 6.5 | 3.3 | 2.5 |
| 11 | PA 66 | 2.7 | E-nBA-AS (67-29-4) | 25 | 31.2 | 6.2 | 3.6 |
| 12 | PA 66 | 2.7 | E-nBA-AS (61-35-4) | 25 | 39.7 | 7.9 | 3.6 |
| 7a[+] | PA 6 | 4 | ohne Zusatz | — | 6.8 | 2.4 | 1.8 |
| 8a[-] | PA 69 | 3.3 | ohne Zusatz | — | 3.0 | 2.5 | 2.2 |
| 10a[+] | PA 66 | 2.7 | ohne Zusatz | — | 2.3 | 0.9 | 0.9 |

[-] nicht erfindungsgemäß.

TABELLE 2

| Beispiel Versuch Nr. | Polyamid 100 Gew.-Teile | rel. Vis-kosität | Copolymeres | Menge (Gew.-Teile) | Kerbschlag-zähigkeit +23°C | Durchstoßarbeit an Rundscheibe, 2 mm [Nm] | | |
|---|---|---|---|---|---|---|---|---|
| | | | | | | +23°C | −20°C | −40°C |
| 13[+] | PA 6 | 3.3 | E-tBA-AS (89-7-4) | 25 | 24 | 69.1 | 33.3 | 2.0 |
| 14 | PA 6 | 3.3 | E-nBA-AS (67-29-4) | 25 | 45 | 73.2 | 59.3 | 20.6 |
| 15 | PA 6 | 3.3 | E-nBA-AS (64-32-4) | 25 | 48 | 66.2 | 36.5 | 24.3 |
| 16 | PA 6 | · 3.3 | E-nBA-AS (59-37-4) | 25 | 50 | 61.7 | 48.9 | 36.2 |
| 17[+] | PA 6 | 3.3 | E-nBA-AS (54-42-4) | 25 | 38 | 13.8 | 6.9 | 3.7 |
| 18[+] | PA 6 | 3.3 | E-nBA-AS (47-49-4) | 25 | 43 | 10.4 | 4.9 | 1.9 |

[+] nicht erfindungsgemäß.

**0 096 264**

1. Schlagzähe Polyamid-Formmassen, enthaltend

(A) ein thermoplastisches Polyamid und

(B) 5 bis 60 Gew.%, bezogen auf (A), eines unvernetzten, zumindest ternären Copolymerisats aus

a) 55 bis 79,5 Gew.% Ethylen

b) 20 bis 40 Gew.% zumindest eines primären oder sekundären $C_2$—$C_8$-Alkylesters der (Meth)acrylsäure und

c) 0,5 bis 8 Gew.% eines säurefunktionellen, oder latent säurefunktionellen Monomeren,

wobei die Summe der Komponenten a) bis c) 100 Gew.% beträgt, und

(C) gegebenenfalls übliche Zusatzstoffe in wirksamen Mengen, dadurch gekennzeichnet, daß die komponente (A) eine relative Viskosität von 2,5 bis 3,4 aufweist und daß die Komponente (B) einen Schmelzbereich zwischen 40 und 100°C, eine Glasübergangs-temperatur unterhalb −20°C und einen Schubmodul von unter 100 [$Nmm^{-2}$] bei −20°C, unter 50 [$Nmm^{-2}$] bei 0°C und unter 20 [$Nmm^{-2}$] bei +20°C besitzt.

2. Schlagzähe Polyamid-Formmassen gemäß Anspruch 1, dadurch gekennzeichnet, daß die Komponente b) n-Butylacrylat ist.

3. Schlagzähe Polyamid-Formmassen gemäß Anspruchen 1 oder 2, dadurch gekennzeichnet, daß die Komponente c) Acrylsäure, Methacrylsäure, Maleinsäureanhydrid oder t-Butylacrylat ist.

**Revendications**

1. Matières à mouler résistant aux chocs à base d'un polyamide, contenant

(A) un polyamide thermoplastique et

(B) 5 à 60% du poids de (A) d'un copolymère au moins ternaire, non réticulé, de

a) 55 à 79,5% en poids d'éthylène,

b) 20 à 40% en poids d'au moins un (méth)acrylate d'alkyle en $C_2$ à $C_8$ primaire ou secondaire et

c) 0,5 à 8% en poids d'un monomère à fonction acide ou à fonction acide latente,

la somme des composants a) à c) étant égale à 100% en poids,

(C) éventuellement d'autres additifs usuels en des proportions efficaces, caractérisées en ce que le composant (A) possède une viscosité relative comprise entre 2,5 et 3,4 et le composant (B) une gamme de fusion de 40 à 100°C, une température de transition vitreuse inférieure à −20°C et un module de cisaillement (en $Nmm^{-2}$) inférieur à 100 à −20°C, inférieur à 50 à 0°C et inférieur à 20 à +20°C.

2. Matières à mouler résilientes à base d'un polyamide suivant la revendication 1, caractérisées en ce que le composant b) est de l'acrylate de n-butyle.

3. Matières à mouler résilentes à base d'un polyamide suivant la revendication 1 ou 2, caractérisées en ce que le composant c) est de l'acide acrylique, de l'acide méthacrylique, de l'anhydride maléique ou de l'acrylate de n-butyle.

**Claims**

1. A nylon molding material which has high impact strength and contains

(A) a thermoplastic nylon, and

(B) from 5 to 60% by weight, based on (A), of a non-crosslinked copolymer which contains three or more components and comprises

a) from 55 to 79.5% by weight of ethylene,

b) from 20 to 40% by weight of one or more primary or secondary $C_2$—$C_8$-alkyl acrylates or methacrylates, and

c) from 0.5 to 8% by weight of a monomer containing an acidic functional group or a latent acidic functional group, the sum of components (a) to (c) being 100% by weight, with or without

(C) effective amounts of conventional additives, wherein component (A) has a relative viscosity of from 2.5 to 3.4, and component (B) has a melting range of from 40 to 100°C, a glass transition temperature of below −20°C and a shear modulus of less than 100 ($Nmm^2$) at −20°C, less than 50 ($Nmm^2$) at 0°C and less than 20 ($Nmm^2$) at +20°C.

2. A nylon molding material having high impact strength, as claimed in claim 1, wherein component b) is n-butyl acrylate.

3. A nylon molding material having high impact strength, as claimed in claim 1 or 2, wherein component c) is acrylic acid, methacrylic acid, maleic anhydride or t-butyl acrylate.

7